# EUROPEAN PATENT SPECIFICATION

(11) **EP 3 400 447 B1**
(45) Date of publication and mention of the grant of the patent: **10.05.2023**
(21) Application number: 16884100.5
(22) Date of filing: 07.01.2016
(51) Int. Cl.: G01N 35/10, G01N 21/00, G01N 27/00, G01N 29/00, G01N 35/00

(54) **DETECTING A SUBSTRATE**
ERKENNUNG EINES SUBSTRATS
DÉTECTION D'UN SUBSTRAT

(43) Date of publication of application: 14.11.2018
(73) Proprietor: Rarecyte, Inc., Seattle, WA 98121 (US)
(72) Inventor: VARSHAVSKAYA, Paulina, Seattle, WA 98121 (US); SHAFER, Edward, Seattle, WA 98121 (US); QUARRE, Steve, Seattle, WA 98121 (US); SEUBERT, Ronald C., Seattle, WA 98121 (US)
(74) Representative: J A Kemp LLP
(86) International application number: PCT/US2016/012426
(87) International publication number: WO 2017/119884

(56) References cited:
- WO-A1-99/36760
- US-A1- 2002 074 512
- US-A1- 2004 061 049
- US-A1- 2006 121 602
- US-A1- 2012 231 532
- US-A1- 2014 125 776
- US-A1- 2015 185 243

## Description

### TECHNICAL FIELD

This disclosure relates generally to detecting a substrate, though more specifically, to detecting a slide surface within a scanner.

### BACKGROUND

A picker or picking system may be used to isolate a target analyte from a suspension in or on a substrate, such as a well, a well plate, a slide, a tube, or the like, or to draw a fluid, such as a, suspension, solution or reagent, from the substrate. As a result, practitioners, researchers, and those working with suspensions continue to seek systems and methods to more efficiently and accurately detect a substrate surface.

US 2015/185243 A1 discloses a device and a system for aspirating and dispensing a target analyte, target material, or fluid.

WO 99/36760 A1 discloses an apparatus for depositing fluid dots on a receiving surface in an array suitable for microscopic analysis reaction, or the like.

### SUMMARY OF THE INVENTION

According to the present invention there is provided the method of claim 1. Additional aspects of the invention are set out in the dependent claims.

### DESCRIPTION OF THE DRAWINGS

Figure 1 shows an example scanner.
Figures 2A-2B show a subsystem of the scanner of Figure 1.
Figure 3 shows a second output obtained at three different locations on a substrate.
Figure 4A shows a first output and a second output superimposed.
Figure 4B shows the difference between the first output and the second output of Figure 4A.
Figure 5A shows outputs.

### DETAILED DESCRIPTION

This disclosure is directed to a system and method for detecting a surface of a substrate within a scanner.

### General Description of a Scanner and Subsystem

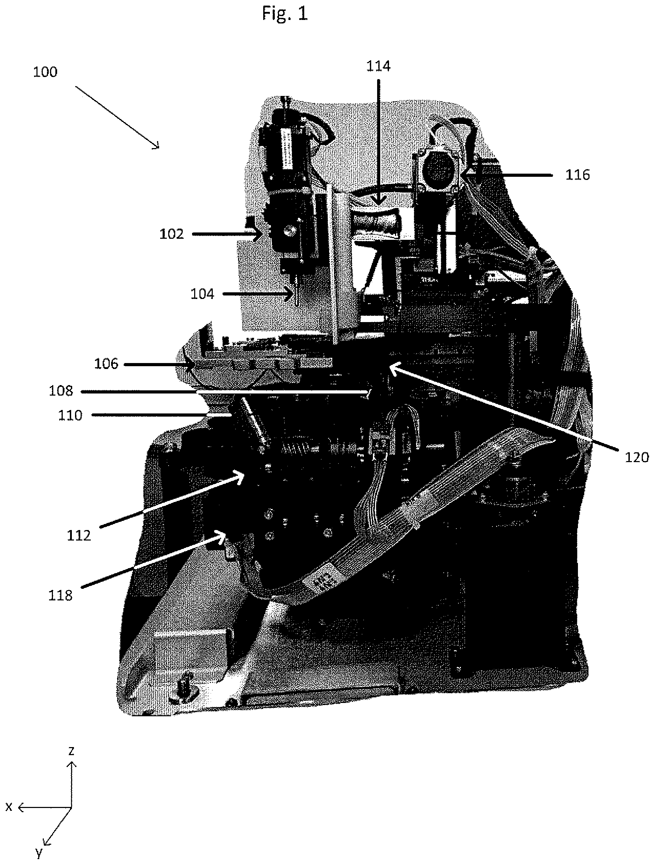

Figure 1 shows an isometric view of a scanner 100 with a cover removed. The scanner 100 includes a picker 102 having a picker tip 104. The picker 100 is a device for isolating a target analyte or target material from the remainder of a sample. The picker 102 may be driven along the z-axis by a z-picker motor system, which may include at least one of a coarse z-motor 116 and a fine z-motor 114.

The scanner 100 also includes a slide holder 106 for holding and supporting a substrate (not shown) that includes the sample, such as buffy coat, or a fluid, such as a reagent. The scanner 100 may also include a turret 112, including a first objective 110 and a deflection detector 108, which rotates to bring the first objective 100 and the deflection detector 108 underneath the substrate when it is desirous to do so. The turret 112 may include more than one objective, each objective having different magnification levels, when it is desirous to do so. The deflection detector 108 may be tactile (i.e. touch or pressure sensor), capacitive, optical, acoustic (i.e. sound) or the like. A z-axis turret motor 118 drives the turret 112 along the z-axis, such as towards and away from the substrate or slide holder 106.

A slide motor 120 may be activated to move the slide holder 106, and there by moving the substrate (not shown), horizontally or orthogonally. The picker 102 may be connected to the z-picker motor system, which may include a coarse z-motor 116 and a fine z-motor 114. The fine z-motor 114 may be a vibration-inducing component (i.e. a voice coil, an ultrasonic transducer, or the like), may be a drive component that moves in approximately 1-20 µm steps, or a combination thereof to induce vibration and drive the picker tip 104 (i.e. a piezoelectric motor or the like).

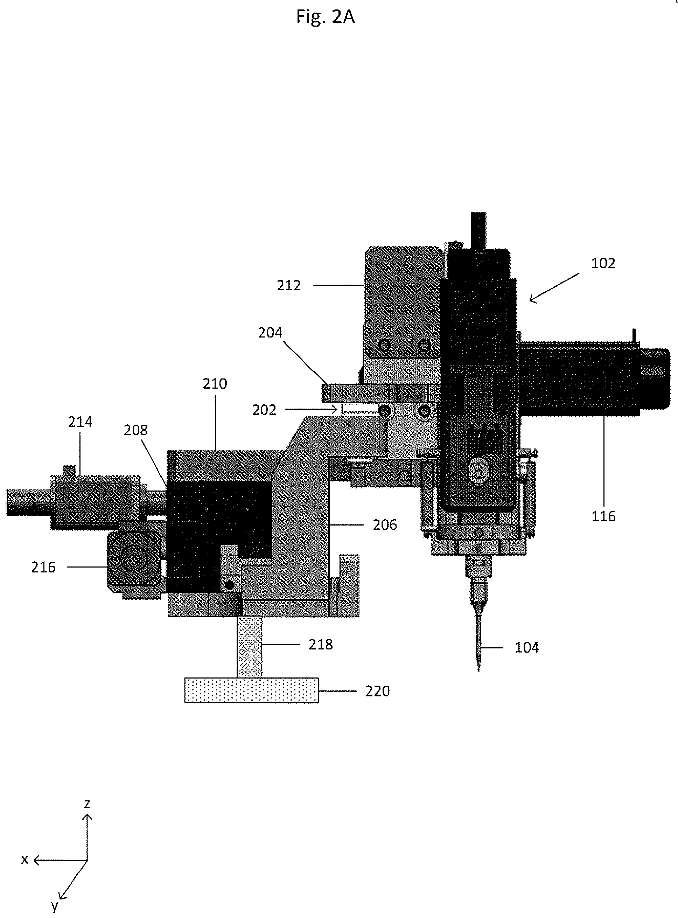

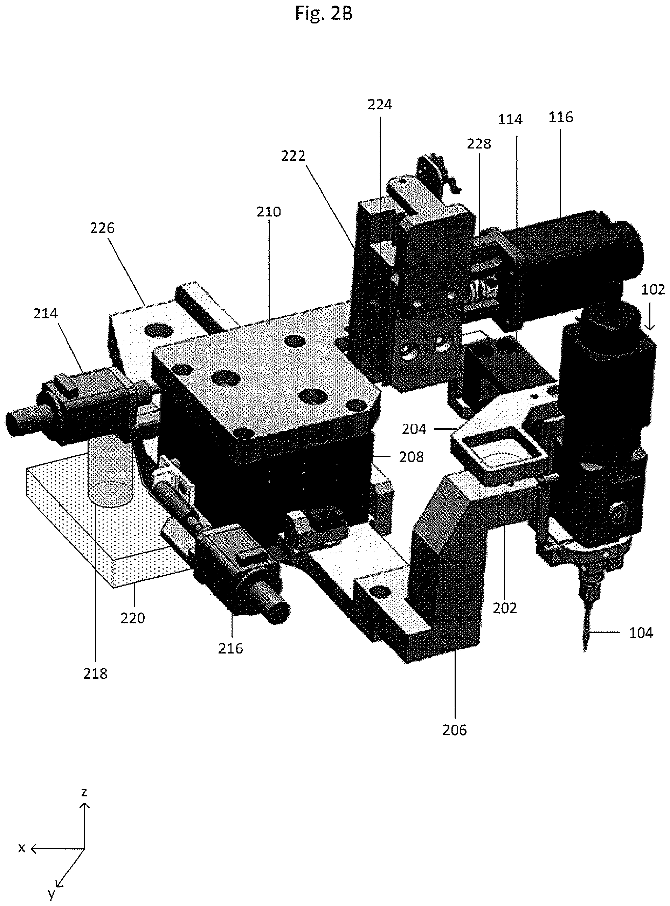

Figures 2A and 2B show a subsystem 200 of the picking and imaging system shown in Figure 1. Figure 2A shows a front view of the subsystem 200 and the Figure 2B shows an isometric view of the subsystem 200. The subsystem 200 includes a position detector including a sensor 202 and a target plate 204. The sensor 202 may be mechanical (switch), electrical (linear encoder), capacitive, optical (laser), acoustic, inductive (linear variable differential transformer), or the like. The subsystem 200 also includes the picker 102 including the picker tip 208; and may also include the slide holder 106 to support a substrate. The slide holder 106 may be a fixed z-distance from the sensor 202 and the target plate 204 may be a fixed z-distance from the picker tip 208. The picker tip 208 and the target plate 204 may be moveable along the z-axis relative to the slide holder 106 and the sensor 202, respectively. Furthermore, the target plate 204 may be fixedly attached to the picker 102, whether directly (i.e. being mounted to a component of the picker 102) or indirectly (i.e. being mounted to a plate or bracket attached to the picker 102). The subsystem 200 may also include a reference plate 220, which may be a fixed z-distance from at least one of the sensor 202 and the slide holder 106. The subsystem 200 also includes a z-picker motor system, wherein the target plate 204 and the picker 102 are driven along the z-axis by the z-picker motor system. The z-picker motor system may include at least one of the coarse z-motor 116 and the fine z-motor 114. The fine z-motor 114 may be a piezoelectric motor. The fine z-motor 114 has a travel range of approximately 0.001-500 µm and the coarse z-motor 116 has a travel range of approximately 1-50 mm. Additionally, the z-picker motor system may include a vibration-inducing component to cause the picker 102 to oscillate along the z-axis. The vibration-inducing component may be a voice coil, an ultrasonic transducer, or a piezoelectric motor. The picker 102 may oscillate at a frequency less than or equal to approximately 10 kHz and have an amplitude of approximately 1-20 µm.

The z-picker motor system, the sensor 202, and the target plate 204 may form a closed feedback loop, whereby the position detector provides a voltage output determined by the distance between the sensor 202 and the target plate 204. The voltage output of the position detector is amplified by an amplifier and then input into a controller board which provides a second output voltage and feedback to the z-picking motor system. The z-picker motor system may then adjust the distance between the sensor 202 and the target plate 204 to a desired distance based on the second voltage output from the controller board. The distance and second output voltage relationship may have already been calibrated, such that the second output relates to a known distance whereby driving the target plate 204 towards or away from the sensor 202 and determining the second output voltage provides the desired distance. For example, when the second output voltage is 1.0 V, the target plate 204 and the sensor 202 may be 1 mm away from one another. However, when the desired distance is 2 µm, and it is known that the second voltage output is 3.1 V when the target plate 204 and the sensor 202 are 2 µm away from one another, the target plate 204 may be driven towards the sensor 202 until the second output voltage is 3.1 V.

The picker 102 may be connected to an x-y stage 208 such as by an x-y connector plate 210. The x-y stage 208 may be connected to an x-axis motor 216, a y-axis motor 214, and a base plate 226. The base plate 226 may be connected to a reference plate 220 by at least one post 218. The reference plate 220 is stationary and acts as a point or plane against which movement in the x-, y-, and z-axes may be referenced. The reference plate 220 may be mounted on vibration plates (not shown) within the scanner to inhibit the influence of vibration, whether external or internal to the picker 102, on movement and control of the picker 102. The sensor 202 may be connected to the base plate 226 by a sensor mount 206.

The coarse z-motor 116 may be connected to the picker 102 by a coupling 228. The coupling 228 may also be connected to a coarse z-stage carriage 224. A coarse z-stage base 222 may act as a guide for the coarse z-stage carriage 224 and may also include a stop 212 to limit the furthest travel of the coarse z-motor 116 relative to the slide holder 106.

### Example Method I

A method for locating the substrate includes driving the picker 102 including the picker tip 104 from a holding position towards and at least partially past the slide holder 106. Alternatively, the picker 102 including the picker tip 104 may be driven from a holding position towards a substrate without touching or going past the substrate, such that the holding position is above the substrate. During the driving step, a first output is obtained by the position detector. The picker 102 including the picker tip 104 is then returned or withdrawn to the holding position. A substrate (not shown) is then inserted into the slide holder 106. The picker 102 including the picker tip 104 is then re-driven from the holding position towards the substrate until the picker tip at least touches the substrate. During the re-driving step, a second output is obtained by the position detector.

After contact, the picker 102 including the picker tip 104 overtravel until a threshold is reached. The substrate (not shown) may be located by calculating the difference between the first output and the second output, such as a point where the difference is equal to or greater than the threshold (such as 250 ADC counts) or at the point at which the first and second outputs are not equal. The first and second outputs may be plotted, stored in memory, or any appropriate manner of retaining the data for subsequent comparison, analysis, and/or use. The first and second outputs may be voltage, current, or the like.

Though the subsystem above is discussed as being driven along the z-axis, the subsystem may be driven along one of the x-, y-, or z-axes, whether based on orientation or an appropriate layout. For example, when the subsystem drives along the z-axis, the holding position may above or below the slide holder 106.

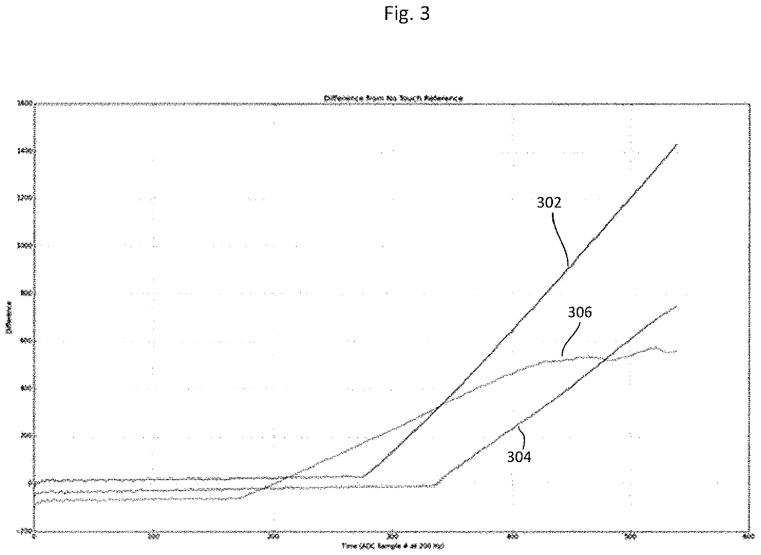

Figure 3 shows the second output obtained at three different locations on the substrate. Line 302 shows the second output when the picker 102 including the picker tip 104 touches a portion of the substrate being the stiffest, which may be the middle section. Line 304 shows the second output when the picker 102 including the picker tip 104 touches a portion of the substrate having a medium stiffness. Line 306 shows the second output when the picker 102 including the picker tip 104 touches a portion of the substrate having the least stiffness. In the example provided, the movement of the break points in the lines 302, 304, 306 may be due to the slope of the substrate.

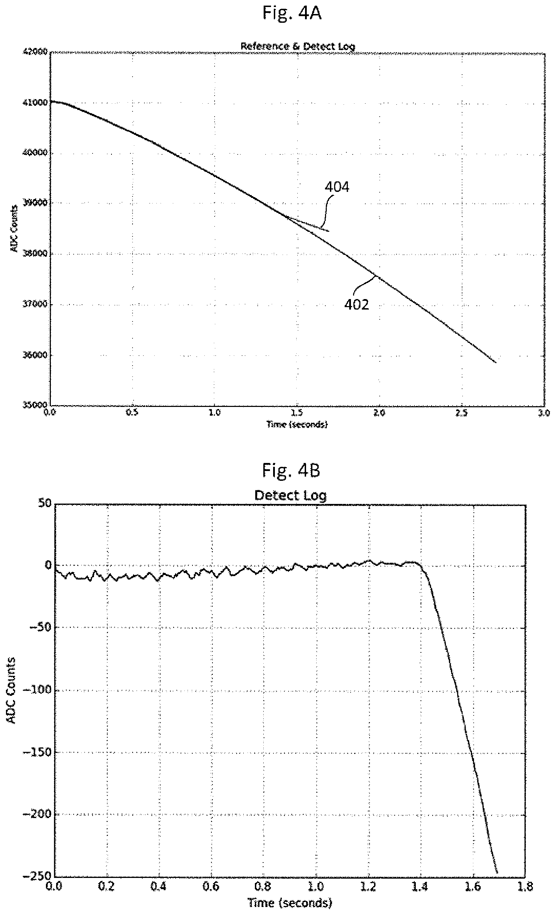

Figure 4A shows a first output 402 and a second output 404 superimposed. The point at which the second output 404 splits from the first output is where the substrate is touched by the picker 102 including the picker tip 104. Figure 4B shows the difference between the first output 402 and the second output 404. In this case, the detect algorithm has been completed when the difference exceeds a threshold, such as 250 ADC counts, during overtravel. Movement and logging data are stopped as well.

### Example Method II

A method for locating the substrate includes driving the picker 102 including the picker tip 104 from a holding position towards the slide holder 106. During the driving step, the picker 102 including the picker tip 104 is moved in steps, for example, from a first position to a second position. A known output is determined based on the movement of the picker 102 from the first position to the second position. The picker 102 including the picker tip 104 is then commanded to be moved from the second position to a third position. However, the picker 102 including the picker tip 104 does not travel the full distance in moving from the second position to the third position.

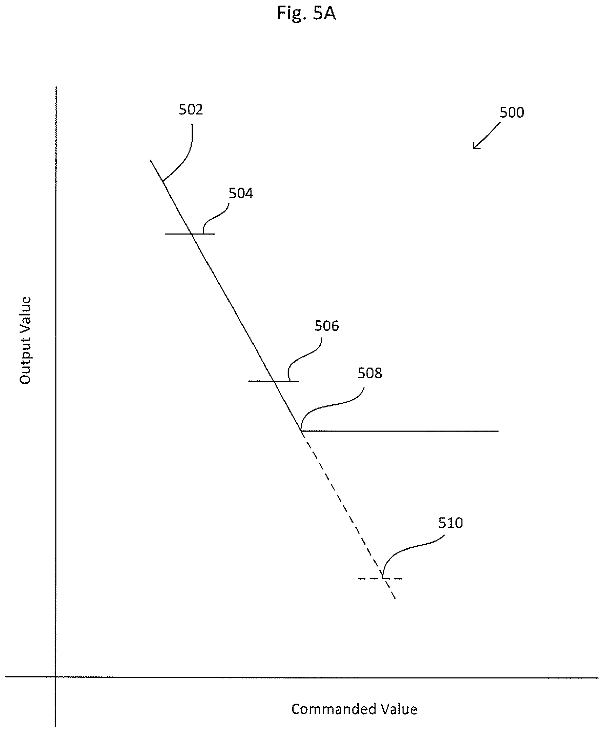

Figure 5A shows an actual output 502 superimposed with an expected output (the dashed line). The picker 102 including the picker tip 104 moves from a first position 504 to a second position 506. The picker 102 including the picker tip 104 is then commanded to move from the second position 506 to a third position 510. As the picker 102 is commanded to move to the third position 510, the values obtained from the position detector are expected to follow the dashed line, thereby resulting in the value of the third position 510. However, during travel, the picker 102 touches the substrate and the output therefore deviates from the expected value. After contact, the picker 102 including the picker tip 104 overtravel until a threshold is reached. The substrate (not shown) may be located by calculating the difference between the actual output and the expected output, such as a point where the difference is equal to or greater than the threshold (such as 250 ADC counts) or at the point at which the actual and expected outputs are not equal.

Overtravel is the continued driving of the picker 102 including the picker tip 104 even after the picker 102 including the picker tip 104 has contacted the substrate. Overtravel may be a step performed after the at least two steps of driving and contacting. After at least contacting, overtravel may range from approximately 1 µm to approximately 1 mm, including such distances as approximately 3, 5, 7, or 10 µm.

The target analyte may be collected, and once collected, the target analyte may be analyzed using any appropriate analysis method or technique, though more specifically intracellular analysis including intracellular or extracellular protein labeling; nucleic acid analysis, including, but not limited to, protein or nucleic acid microarrays; FISH; or bDNA analysis. These techniques require isolation, permeabilization, and fixation of the target analyte prior to analysis. Some of the intracellular proteins which may be labeled include, but are not limited to, cytokeratin ("CK"), actin, Arp2/3, coronin, dystrophin, FtsZ, myosin, spectrin, tubulin, collagen, cathepsin D, ALDH, PBGD, Akt1, Akt2, c-myc, caspases, survivin, p27^{kip}, FOXC2, BRAF, Phospho-Akt1 and 2, Phospho-Erk1/2, Erk1/2, P38 MAPK, Vimentin, ER, PgR, PI3K, pFAK, KRAS, ALKH1, Twist1, Snail1, ZEB1, Slug, Ki-67, M30, MAGEA3, phosphorylated receptor kinases, modified histones, chromatin-associated proteins, and MAGE. In order to fix, permeabilize, or label, fixing agents (such as formaldehyde, formalin, methanol, acetone, paraformaldehyde, or glutaraldehyde), detergents (such as saponin, polyoxyethylene, digitonin, octyl β-glucoside, octyl β-thioglucoside, 1-S-octyl-β-D-thioglucopyranoside, polysorbate-20, CHAPS, CHAPSO, (1,1,3,3-Tetramethylbutyl)phenyl-polyethylene glycol or octylphenol ethylene oxide), or labeling agents (such as fluorescently-labeled antibodies, Pap stain, Giemsa stain, or hematoxylin and eosin stain) may be used.

It should be understood that the method and system described and discussed herein may be used with any appropriate suspension or biological sample, such as blood, bone marrow, cystic fluid, ascites fluid, stool, semen, cerebrospinal fluid, nipple aspirate fluid, saliva, amniotic fluid, vaginal secretions, mucus membrane secretions, aqueous humor, vitreous humor, vomit, and any other physiological fluid or semi-solid. It should also be understood that a target analyte can be a cell, such as ova or a circulating tumor cell ("CTC"), a fetal cell (i.e. a trophoblast, a nucleated red blood cell, a fetal white blood cell, a fetal red blood cell, etc.), a circulating endothelial cell, an immune cell (i.e. naive or memory B cells or naive or memory T cells), a vesicle, a liposome, a protein, a nucleic acid, a biological molecule, a naturally occurring or artificially prepared microscopic unit having an enclosed membrane, a parasite, a microorganism, or an inflammatory cell.

## Claims

1. A method for locating a substrate, the method comprising:
driving a picker (102) including a picker tip (104) towards the substrate;
providing at least one output value during the driving step;
performing a reference drive, wherein the picker (102) is driven past the substrate, and obtaining at least one reference output value or range of values during the reference drive step;
contacting the substrate with the picker tip (104),
providing a contact value during the contacting step;
overtraveling the substrate with the picker tip (104),
wherein overtraveling is the continued driving of the picker (102) including the picker tip (104) even after the picker (102) including the picker tip (104) has contacted the substrate; and
providing at least one overtravel value during the overtraveling step; and
locating the substrate by calculating the difference between the at least one reference output value or range of values and the at least one overtravel value;
wherein the location of the substrate is at a point where the difference is equal to or greater than a threshold;
wherein the at least one output value is due to an expected change in distance between the picker tip (104) and the substrate during the driving step,
wherein the contact value is due to a less-than-expected change in distance between the picker tip (104) and the substrate during the contacting step.

2. The method of claim 1, wherein the overtraveling ranges from approximately 1 µm to approximately 1 mm.

3. The method of claim 2, wherein the overtravel range is approximately 3, 5, 7, or 10 µm.

4. The method of claim 1, wherein a sensor (202) is fixed relative to the substrate, and wherein a target plate (204) is fixedly attached to the picker (102).

5. The method of claim 4, wherein the sensor (202) is inductive, mechanical, capacitive, optical, or acoustic.

6. The method of claim 1, wherein the driving steps are performed along one of the x-, y-, or z-axes.

7. The method of claim 4, wherein the sensor (202) is an encoder.

8. The method of claim 1, wherein the driving step includes moving the picker (102) from a first position to a second position.

9. The method of claim 8, further comprising:
commanding the picker (102) to move from the second position to a third position prior to the contacting step,
wherein the picker does not travel the full distance from the second position to the third position due to the picker tip contacting the substrate which provides the contact value.

10. The method of claim 9, wherein the difference between the first and second positions is equal to the difference between the second and third positions.

11. The method of claim 9, wherein an expected value of the third position is a known output based on the movement of the picker from the first position to the second position.

12. The method of claim 1, further comprising withdrawing the picker (102) a set amount after the contacting step.

13. The method of claim 12, wherein the withdrawing step is recorded as a holding position.

## Patentansprüche

1. Verfahren zum Lokalisieren eines Substrats, wobei das Verfahren Folgendes umfasst:
Antreiben eines Aufnehmers (102) mit einer Aufnehmerspitze (104) in Richtung des Substrats;
Bereitstellen mindestens eines Ausgabewerts während des Antriebsschritts;
Durchführen einer Referenzfahrt, wobei der Aufnehmer (102) an dem Substrat vorbeigefahren wird, und Erhalten mindestens eines Referenzausgabewertes oder eines Bereichs von Werten während des Referenzfahrtschrittes;
Kontaktieren des Substrats mit der Aufnehmerspitze (104),
Bereitstellen eines Kontaktwerts während des Kontaktierungsschritts;
Überfahren des Substrats mit der Aufnehmerspitze (104), wobei das Überfahren der fortgesetzte Antrieb des Aufnehmers (102) einschließlich der Aufnehmerspitze (104) ist, selbst nachdem der Aufnehmer (102) einschließlich der Aufnehmerspitze (104) das Substrat kontaktiert hat; und
Bereitstellen mindestens eines Überfahrwerts während des Überfahrschritts; und
Lokalisieren des Substrats durch Berechnen der Differenz zwischen dem mindestens einen Referenzausgabewert oder einem Bereich von Werten und dem mindestens einen Überfahrwert;
wobei der Ort des Substrats an einem Punkt liegt, an dem die Differenz gleich oder größer als ein Schwellenwert ist;
wobei der mindestens eine Ausgabewert auf eine erwartete Änderung des Abstands zwischen der Aufnehmerspitze (104) und dem Substrat während des Fahrschritts zurückzuführen ist,
wobei der Kontaktwert auf eine weniger als erwartete Änderung des Abstands zwischen der Aufnahmespitze (104) und dem Substrat während des Kontaktierungsschritts zurückzuführen ist.

2. Verfahren nach Anspruch 1, wobei das Überfahren im Bereich von etwa 1 µm bis etwa 1 mm liegt.

3. Verfahren nach Anspruch 2, wobei der Überfahrbereich etwa 3, 5, 7 oder 10 µm beträgt.

4. Verfahren nach Anspruch 1, wobei ein Sensor (202) relativ zum Substrat fixiert ist und wobei eine Zielplatte (204) fest am Aufnehmer (102) angebracht ist.

5. Verfahren nach Anspruch 4, wobei der Sensor (202) induktiv, mechanisch, kapazitiv, optisch oder akustisch ist.

6. Verfahren nach Anspruch 1, wobei die Antriebsschritte entlang einer der x-, y- oder z-Achsen durchgeführt werden.

7. Verfahren nach Anspruch 4, wobei der Sensor (202) ein Encoder ist.

8. Verfahren nach Anspruch 1, wobei der Antriebsschritt das Bewegen des Aufnehmers (102) von einer ersten Position zu einer zweiten Position umfasst.

9. Verfahren nach Anspruch 8, das ferner Folgendes umfasst:
Anweisen des Aufnehmers (102), sich vor dem Kontaktierungsschritt von der zweiten Position in eine dritte Position zu bewegen,
wobei der Aufnehmer nicht die volle Strecke von der zweiten Position zur dritten Position zurücklegt, weil die Aufnehmerspitze das Substrat kontaktiert, das den Kontaktwert liefert.

10. Verfahren nach Anspruch 9, wobei die Differenz zwischen der ersten und der zweiten Position gleich der Differenz zwischen der zweiten und der dritten Position ist.

11. Verfahren nach Anspruch 9, wobei ein erwarteter Wert der dritten Position eine bekannte Ausgabe ist, basierend auf der Bewegung des Aufnehmers von der ersten Position zur zweiten Position.

12. Verfahren nach Anspruch 1, das ferner das Zurückziehen des Aufnehmers (102) um einen bestimmten Betrag nach dem Kontaktierungsschritt umfasst.

13. Verfahren nach Anspruch 12, wobei der Rückzugsschritt als eine Halteposition aufgezeichnet wird.

## Revendications

1. Procédé de localisation d'un substrat, le procédé comprenant :
l'entraînement d'un ramasseur (102) comprenant une pointe de ramasseur (104) vers le substrat ;
la fourniture d'au moins une valeur de sortie pendant l'étape d'entraînement ;
la réalisation d'un entraînement de référence, dans lequel le ramasseur (102) est entraîné devant le substrat, et l'obtention d'au moins une valeur de sortie de référence ou une plage de valeurs pendant l'étape d'entraînement de référence ;
la mise en contact du substrat avec la pointe de ramasseur (104),
la fourniture d'une valeur de contact pendant l'étape de mise en contact ;
la surcourse du substrat avec la pointe de ramasseur (104),
dans lequel la surcourse est l'entraînement continu du ramasseur (102) comprenant la pointe de ramasseur (104) même après que le ramasseur (102) comprenant la pointe de ramasseur (104) a contacté le substrat ; et
la fourniture d'au moins une valeur de la surcourse pendant l'étape de la surcourse ; et
la localisation du substrat en calculant la différence entre l'au moins une valeur de sortie de référence ou plage de valeurs et l'au moins une valeur de la surcourse ;
dans lequel l'emplacement du substrat est à un point où la différence est égale ou supérieure à un seuil ;
dans lequel l'au moins une valeur de sortie est due à un changement attendu de distance entre la pointe de ramasseur (104) et le substrat pendant l'étape d'entraînement,
dans lequel la valeur de contact est due à un changement de distance moins important que prévu entre la pointe de ramasseur (104) et le substrat lors de l'étape de mise en contact.

2. Procédé selon la revendication 1, dans lequel les plages de surcourse vont d'environ 1 µm à environ 1 mm.

3. Procédé selon la revendication 2, dans lequel la plage de surcourse est d'environ 3, 5, 7 ou 10 µm.

4. Procédé selon la revendication 1, dans lequel un capteur (202) est fixé par rapport au substrat, et dans lequel une plaque cible (204) est fixée de manière fixe au ramasseur (102).

5. Procédé selon la revendication 4, dans lequel le capteur (202) est inductif, mécanique, capacitif, optique ou acoustique.

6. Procédé selon la revendication 1, dans lequel les étapes d'entraînement sont effectuées le long de l'un des axes x, y ou z.

7. Procédé selon la revendication 4, dans lequel le capteur (202) est un codeur.

8. Procédé selon la revendication 1, dans lequel l'étape d'entraînement comprend le déplacement du ramasseur (102) d'une première position à une deuxième position.

9. Procédé selon la revendication 8, comprenant en outre :
la commande au ramasseur (102) de se déplacer de la deuxième position à une troisième position avant l'étape de mise en contact,
dans lequel le ramasseur ne parcourt pas la distance complète de la deuxième position à la troisième position en raison du contact de la pointe du ramasseur avec le substrat qui fournit la valeur de contact.

10. Procédé selon la revendication 9, dans lequel la différence entre les première et deuxième positions est égale à la différence entre les deuxième et troisième positions.

11. Procédé selon la revendication 9, dans lequel une valeur attendue de la troisième position est une sortie connue basée sur le mouvement du ramasseur de la première position à la deuxième position.

12. Procédé selon la revendication 1, comprenant en outre le retrait du ramasseur (102) d'une quantité déterminée après l'étape de mise en contact.

13. Procédé selon la revendication 12, dans lequel l'étape de retrait est enregistrée comme une position de maintien.
